# EUROPÄISCHE PATENTSCHRIFT

(11) **EP 0 523 358 B1**
(45) Veröffentlichungstag und Bekanntmachung des Hinweises auf die Patenterteilung: **14.12.1994**
(21) Anmeldenummer: 92109252.4
(22) Anmeldetag: 02.06.1992
(51) Int. Cl.: B60R 25/10

(54) **Schaltanordnung einer Einbruch-Diebstahl-Warnanlage**
Circuit arrangement for an intruder or anti-theft alarm system
Circuit pour un système d'alarme d'intrusion ou antivol

(30) Priorität: 13.07.1991 DE 4123270
(43) Veröffentlichungstag der Anmeldung: 20.01.1993
(73) Patentinhaber: MERCEDES-BENZ AG, 70327 Stuttgart (DE)
(72) Erfinder: Neuffer, Klaus, W-7030 Böblingen (DE); Grickscheit, Helmut, Dipl.-Ing., W-7032 Sindelfingen (DE)

(56) Entgegenhaltungen:
- DE-C- 3 630 448
- DE-C- 3 810 806
- FR-A- 2 520 316

## Beschreibung

Die Erfindung bezieht sich auf eine Schaltanordnung einer Einbruch-Diebstahl-Warnanlage (im folgenden EDW abgekürzt) für ein Fahrzeug mit den Merkmalen des Oberbegriffs des Patentanspruchs 1.
Es ist gesetzlich zugelassen, eine EDW, die üblicherweise im Alarmfall mittels einer Hupe oder dgl. akustische Alarmsignale erzeugt, mit der Warnblinkanlage eines Fahrzeugs zu koppeln, so daß mittels der Fahrzeugblinkleuchten zusätzlich intermittierende optische Alarmsignale erzeugt werden. Insbesondere bei Dunkelheit ist damit das alarmgebende Fahrzeug besser zu orten.

Eine entsprechend arbeitende EDW ist bekannt (DE 38 10 806 C1), bei der das Steuergerät selbst einen Taktgeber enthält, der im Alarmfall über ein befristet umgeschaltetes Doppelkontaktrelais des Steuergeräts alle Fahrzeugblinkleuchten intermittierend betreibt. Wie diese Einrichtung mit dem normalen Warnblinkbetrieb zusammenwirkt, ist in der genannten Druckschrift nicht offenbart. Dieser ist auch keine Aussage über das Verhältnis der Blinkfrequenzen im Warn- und im Alarmbetrieb der Blinklampen zu entnehmen bzw. wie dieses einzustellen wäre.

Ein Problem ist hierbei, daß bestimmte Länder unterschiedliche Blinkgeschwindigkeiten für den Warnblink- und für den Alarmbetrieb fordern. Dies dient vor allem zur Unterscheidung zwischen Pannensituationen, in denen die Warnblinkanlage manuell einzuschalten ist, und den vorgenannten Alarmfällen, in denen unbefugte Zugriffsversuche gemeldet werden sollen. In der EG ist für den Alarmfall die doppelte Frequenz des Warnblinkbetriebs vorgeschrieben, während z. B. in Japan einfache Frequenz zulässig ist.
In der Schweiz hingegen ist akustischer Dauerton zulässig, während in der EG intermittierende Alarmtöne gefordert werden.

Der an sich befristet (max. 5 Minuten) anzuzeigende Alarmzustand wird während des unbefugten Fahrbetriebs ständig neu angestoßen; z. B. bei jeder Betätigung der Bremsen über den Bremslichtschalter oder auch beim Einschalten anderer elektrischer Verbraucher im Fahrzeug.
Auch gestohlene Fahrzeuge, die also mit aktivierter Alarmanlage gefahren werden, sollten aber verkehrssicher sein, d. h. die normalen Fahrtrichtungs- bzw. Warnblinksignale müssen auch weiterhin erzeugt werden können. Unter Umständen könnten dann die durch die EDW aktivierten Blinklampen bei zusätzlichem Einschalten der normalen Blinkanlage in einem undefinierten Rhythmus aufleuchten, weil zwei unterschiedliche lastabhängige Blinkgeber auf sie einwirken, deren lastabhängige Funktion durch fremdgespeiste Spannungspegel gestört wird.
Sonstige Lichtquellen, die je nach Ländervorschrift auch über eine EDW betrieben werden dürfen, z. B. Scheinwerfer und Rücklichter, sollten auch im unbefugten Fahrbetrieb zumindest normal einschaltbar sein.

Es ist eine Fahrtrichtungsanzeige- und Warnblinkeinrichtung für Kraftfahrzeuge bekannt (DE 36 30 448 C1), mit der dem willkürlich, z. B. vorschriftsmäßig beim Abschleppen eines Fahrzeugs, eingeschalteten Warnblinkbetrieb durch Betätigung des Fahrtrichtungsanzeigeschalters ein Fahrtrichtungsanzeigesignal willkürlich überlagert werden kann.
Ein Zusammenhang mit einer EDW, die ebenfalls einen (modifizierten) Warnblinkbetrieb bewirken kann, ist in der genannten Druckschrift nicht offenbart.

In von der Anmelderin hergestellten Fahrzeugen der Baureihe R 129 (300 - 500 SL) wird ein mikroprozessorgesteuerter Blinkgeber (Zeitfunktionsrelais) verwendet, um diese unterschiedlichen Blinkfrequenzen bereitzustellen. Mit Hilfe eines speziellen Steuereingangs am Blinkgeber, der mit dem Steuergerät der EDW verbunden ist, kann ein von letzterem im Alarmfall abgegebenes Steuersignal entsprechend ausgewertet werden und den Alarmblinkbetrieb mit erhöhter Frequenz auslösen, während bei Warnblinkbetrieb der übliche, serienmäßige Warnblinkschalter im Fahrzeug verwendet wird.
Des weiteren wird in dieser Anlage für jede Fahrzeugseite ein eigenes Taktrelais für die jeweiligen Blinklampen verwendet; damit wird unter anderem die bereits erwähnte Überlagerung von Fahrtrichtungsanzeigesignalen über Warnblinksignale ermöglicht. Das EDW-Steuergerät enthält hier keinen eigenen Taktgeber, vielmehr wird der dazu erforderliche Mehraufwand durch das Zeitfunktionsrelais realisiert.

Es wäre jedoch aus Kosten- und Montagegründen von Vorteil, eine herkömmliche Warnblinkanlage mit einem einfachen lastgesteuerten Taktgeber mit einem Relais für den oben skizzierten Einsatzzweck gemeinsam mit einer EDW benutzen zu können, ohne einen speziellen EDW-Eingang vorsehen zu müssen. Warnblinkbetrieb wird bei derartigen konventionellen Anlagen bekanntlich dadurch geschaltet, daß über den Warnblinkschalter alle Blinklampen beidseits des Fahrzeugs verbunden und gleichzeitig an den Taktgeber angeschlossen werden.
Mit einer solchen Maßnahme könnten bei der Fahrzeugherstellung Vorleistungen für einen eventuellen Einbau einer EDW-Sonderausstattung eingespart werden.

Die Erfindung hat die Aufgabe, eine gattungsgemäße Schaltanordnung in einfacher Weise so auszubilden, daß auch bei ausgelöstem Alarm ein mit Rücksicht auf die Sicherheit anderer Verkehrsteilnehmer im Hinblick auf abgestrahlte optische Signale sicherer Fahrbetrieb möglich ist.

Diese Aufgabe wird mit den kennzeichnenden Merkmalen des Patentanspruchs 1 erfindungsgemäß gelöst.

Die kennzeichnenden Merkmale der Unteransprüche geben vorteilhafte Weiterbildungen der erfindungsgemäßen Schaltanordnung an.

Zwar werden die dazu vorgesehenen Lichtquellen des Fahrzeugs im Alarmfall durch das EDW-Steuergerät zyklisch getaktet, jedoch überwacht dieses zumindest in der Dunkelphase der Taktzyklen die Leitungen zu den Lichtquellen, die auch über andere Schalter, insbesondere den Fahrtrichtungsanzeigeschalter oder den Warnblinkschalter, in Betrieb genommen werden können.
In einfachster Weise (Plausibilitätstest) kann durch Erfassung eines in der Dunkelphase jedes Alarm-Blinkzyklus auf einer Leitung zu den Lichtquellen auftretenden positiven Spannungspegels darauf geschlossen werden, daß dieser fremd eingespeist ist und somit einer der erwähnten anderen Schalter geschlossen wurde.

Werden die Leitungen hingegen ständig, also auch in der Hellphase, überwacht, so wird durch Vergleich zwischen dem Zeitpunkt des auftretenden Signals und einer alarmbedingten Taktung - die in der Regel durch ein Relais geschaltet wird - eine Selbstlähmung des Alarmblinkens ausgeschlossen. Dies kann durch logische Verknüpfung von elektrischen Signalen realisiert werden.

Sobald ein fremdgespeistes Signal vorliegt, zieht sich das EDW-Steuergerät für eine vorbestimmte Zeitspanne von den Lichtquellen-Stromkreisen zurück, so daß dem eingeschalteten anderen Schalter im Interesse der Sicherheit vor allem unbeteiligter Verkehrsteilnehmer Vorrang gewährt wird.
In dem üblichen Fall der fakultativen Alarmtaktung der Fahrtrichtungs-Blinklampen wird ein Gegeneinandertakten zweier verschiedener Taktgeber sicher verhindert, ohne daß zusätzliche Eingriffe in den vorhandenen Fahrtrichtungsanzeige-Taktgeber erforderlich sind. Dieser kann somit wie angestrebt von einfachstem Aufbau sein, während die notwendigen Schaltungsmaßnahmen in den Bereich der als Sonderausstattung lieferbaren EDW verlegt werden.

Natürlich sind auch andere Methoden zur Signalerfassung gleichwertig anwendbar; z. B. könnte auch ein in besagter Dunkelphase zu den Lichtquellen fließender Strom entsprechend als fremd eingespeist gedeutet werden.

Mit einem EDW-Steuergerät der hier vorgeschlagenen Art, das üblicherweise einen Mikroprozessor (µP) enthält, ist es ferner auch in einfacher Weise möglich, die unterschiedlichen Anforderungen an die Blinkfrequenz der optischen Alarmsignale ohne hardwareseitige Vorkehrungen zu erfüllen. Mit entsprechender Programmierung des µP kann diesem über eine Pin-/Kabelsatzcodierung, die außen an dem Steuergerät vorgenommen wird, die verlangte Blinkfrequenz vorgegeben werden.
Beispielsweise können über zwei Anschlußpins, die wahlweise frei bleiben oder z. B. an Masse angeschlossen werden, vier unterschiedliche Vorgaben gemacht werden.
Auch hierbei sind bei einer eventuellen Umrüstung eines Fahrzeugs keinerlei hardwareseitige Änderungen im Steuergerät selbst oder gar dessen Austausch vorzunehmen; diese Merkmale finden ausschließlich in der Software des µP sowie einer äußerlichen Codierungsänderung ihren Niederschlag.

Weitere Einzelheiten und Vorteile gehen aus der Zeichnung eines Ausführungsbeispiels und deren sich hier anschließender eingehender Beschreibung hervor.

Es zeigen
- Figur 1: einen schematischen Gesamtschaltplan der Schaltanordnung,
- Figur 2: eine Schaltskizze mit Logikelementen zur Signalauswertung als Detail einer Anordnung nach Figur 1.

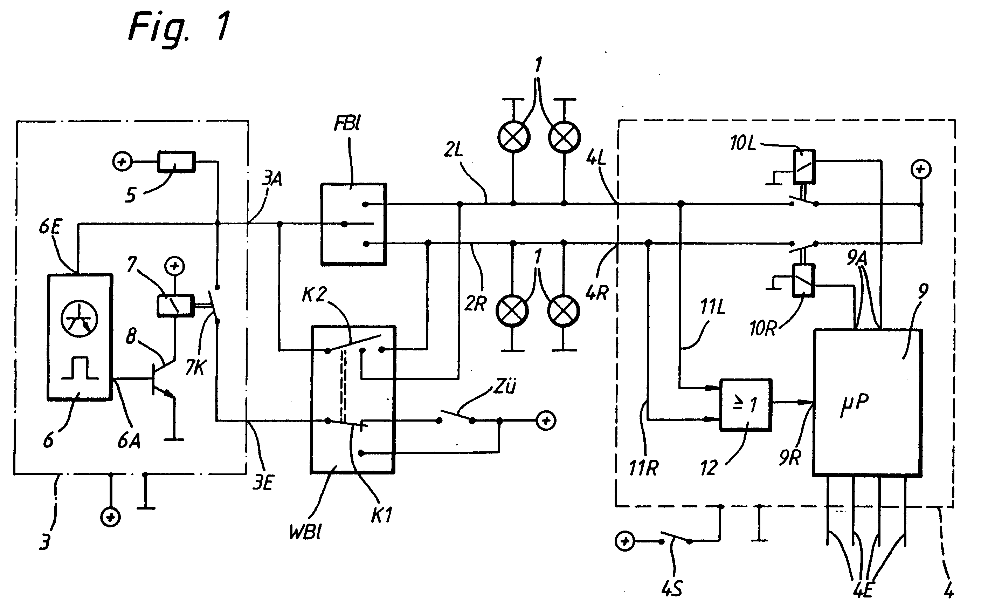

In einem nicht dargestellten Fahrzeug sind gemäß **Figur 1** Lichtquellen 1, z. B. als Blinklampen einer Fahrtrichtungsanzeige- und Warnblinkanlage, vorgesehen, die über nach Fahrzeugseiten getrennte Leitungen 2R bzw. 2L elektrisch sowohl - mittels eines Fahrtrichtungsanzeige-Schalters FBl im Wechsel und mittels eines Warnblinkschalters WBl gemeinsam - an einen Ausgang 3A eines Blinksteuergeräts 3 anschließbar als auch fest an Ausgänge 4R bzw. 4L eines Steuergeräts 4 einer elektronischen Einbruch-Diebstahl-Warnanlage (EDW) angeschlossen sind.
Der Warnblinkschalter WBl hat in bekannter Weise einen ersten (um-) schaltbaren Kontakt K1, der einen Eingang 3E des Blinksteuergeräts 3 entweder über einen Zündschalter Zü oder unmittelbar mit Pluspotential aus dem Bordnetz verbindet, und einen nur gemeinsam mit dem Kontakt K1 schaltbaren zweiten Kontakt K2, der für den Warnblinkbetrieb beide Leitungen 2R und 2L mit dem Ausgang 3A des Blinksteuergeräts 3 verbindet.
In der DIN-Nomenklatur der Kfz-Elektrik entsprechen die beiden Eingangsanschlüsse des Warnblinkschalters WBl den Klemmen 15 bzw. 30, der Eingang 3E des Blinksteuergeräts 3 der Klemme 49 und dessen Ausgang 3A der Klemme 49a.
Parallel zu dem Kontakt K2 geschaltet ist der Fahrtrichtungsanzeige-Schalter FBl, ein Wechsler mit Mittellage, der nur jeweils eine der beiden Leitungen 2R oder 2L mit dem Ausgang 3A des Blinksteuergeräts 3 verbinden kann und damit die Lichtquellen 1 zur Erzeugung von Fahrtrichtungsanzeigesignalen einschaltet.
An diesem Ausgang 3A liegt über einen hochohmigen Widerstand 5 ständig Pluspotential, außerdem ist ein Steuereingang 6E eines Taktgebers 6 elektrisch mit dem Ausgang 3A verbunden.
Der Eingang 3E des Blinksteuergeräts 3 ist über einen Schaltkontakt 7K eines Relais 7 mit dem Ausgang 3A verbindbar, wobei das Relais 7 seinerseits über einen Schalttransistor 8 und einen Taktausgang 6A des lastabhängigen Taktgebers getaktet wird, sobald das Potential an dem Ausgang 3A durch Betätigung des Fahrtrichtungsanzeige-Schalters FBl oder des zweiten Kontakts K2 des Warnblinkschalters WBl über die niederohmigen Lichtquellen 1 auf Masse gezogen wird.

Das Steuergerät 4, auf dessen Innenschaltung später noch eingegangen wird, hat eine äußere Spannungsversorgung, die über einen zum Scharfschalten der EDW dienenden Schalter 4S einschaltbar ist.
Die Leitung 2R ist anderseitig an einen Taktausgang 4R und die Leitung 2L an einen Taktausgang 4L des Steuergeräts 4 der EDW angeschlossen.
Selbstverständlich hat das Steuergerät ferner Eingänge 4E, die in bekannter Weise mit nicht gezeigten Signalgebern zur Alarmauslösung nach Scharfschalten zur Fahrzeugsicherung verbunden sind. Hierunter sind in der Regel auch solche Signalgeber, die im Fahrbetrieb immer wieder betätigt werden, z. B. ein Bremslichtschalter, so daß das Steuergerät bei unbefugtem Fahrbetrieb trotz automatisch nach Vorschrift nach relativ kurzer Zeit gelöschtem Alarm immer wieder aktiviert wird, weil die Alarmbedingung erneuert wird bzw. erhalten bleibt.
Nicht dargestellt ist ferner ein Ausgang des Steuergeräts 4 zu einem üblicherweise ebenfalls vorgesehenen akustischen Signalgeber, z. B. der Fahrzeughupe. Dessen Funktion bleibt im übrigen von der hier beschriebenen Alarmsignalunterdrückung unberührt.
Durch Ausschalten der Stromversorgung des Steuergeräts am Schalter 4S kann ein Alarm jederzeit gelöscht werden, jedoch muß zum Betätigen des Schalters 45 üblicherweise ein Schlüssel benutzt werden, der Unbefugten nicht zur Verfügung steht.

Das Steuergerät 4 umfaßt einen zentralen Mikroprozessor 9, der seinerseits im Alarmfall über je einen Ausgang 9A ein Relais 10R bzw. 10L intermittierend aktiviert, wobei die Aktivierungsfrequenz softwareseitig vorgegeben und damit in einfacher Weise beeinflußbar ist. Die beiden Relais 10R und 10L besitzen wiederum je einen Schaltkontakt, über dem die Leitungen 2R und 2L zu den Lichtquellen 1 an Pluspotential der Bordspannungsquelle anschließbar sind. Es ist auch möglich, die beiden Relais 10R und 10L mit ihren Einfachschaltkontakten durch ein Doppelkontaktrelais zu ersetzen.
Die Relaisaktivierung ist hier vereinfacht dargestellt; zwischen dem Mikroprozessor und den Relais sind in der Realität selbstverständlich Verstärker oder Treiber vorgesehen. Anstelle der bzw. des Relais können selbstverständlich auch geeignete Halbleiterschalter verwendet werden.
Des weiteren hat der Mikroprozessor 9 in der Regel eine eigene Dauer-Spannungsversorgung zur Erhaltung des Inhaltes seiner Speicher, bei der jedoch dafür gesorgt ist, daß sie keinen Fehlalarm auslösen kann.
Über Zweigleitungen 11R und 11L der Leitungen 2R und 2L wird das jeweils auf diesen anliegende elektrische Potential an den Mikroprozessor rückgemeldet; dieser braucht für den hier beschriebenen Anwendungsfall nur einen Rückmeldeeingang 9R, vor dem die beiden Zweigleitungen 11R und 11L an einem ODER-Glied 12 zusammengefaßt werden.

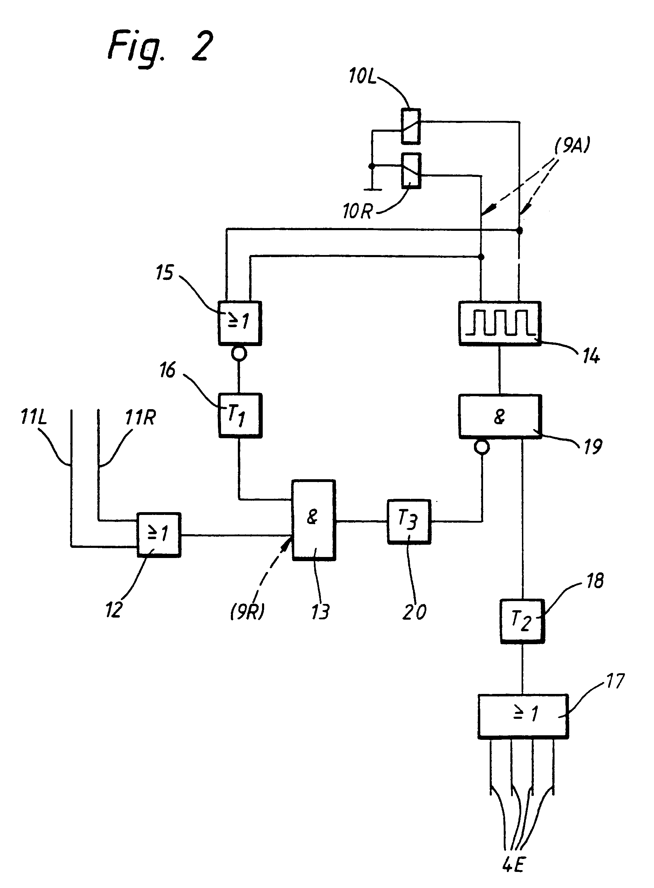

In **Figur 2** ist zur Verdeutlichung der Funktion der Rückmeldung eine mögliche Ausführung einer Auswerteschaltung skizziert, mit der im Rahmen des Steuergeräts 4 die Alarmsignale der Lichtquellen 1 zugunsten einer Signalisierung von Fahrtrichtungsänderungen unterdrückt werden können.

Die Zweigleitungen 11R und 11L sind hier nur angedeutet; das ODER-Glied 12 ist mit seinem Ausgang an einen Eingang eines UND-Gatters 13 angeschlossen, wobei dieser Eingang dem Rückmeldeeingang 9R des Mikroprozessors 9 in Figur 1 entspricht. Nur durch ihre Antriebe angedeutet sind hier auch die Relais 10R und 10L; über nicht dargestellte Treiber sind diese mit einem Taktgeber 14 verbunden, der, wie erwähnt, durch Software des Mikroprozessors 9 darstellbar ist. Die Anschlüsse der Relais 10R/L an den Taktgeber 14 entsprechen den Ausgängen 9A des Mikroprozessors 9 in Figur 1.
Zwischen dem Taktgeber 14 und den Relais sind wiederum Zweigleitungen abgezweigt und an einem ODER-Glied 15 zusammengeführt. Dessen Ausgangssignal wird invertiert und über ein Zeitglied 16 an einen weiteren Eingang des UND-Gatters 13 angelegt. Das Zeitglied 16 mit der Zeitkonstante T₁ dient speziell für den hier gezeigten Fall von Endstufen-Relais als Abfallverzögerung, d. h. Signaländerungen am Ausgang des ODER-Glieds 15 werden erst nach geringer Verzögerung, z. B. T₁ = 20 ms, dem Eingang des UND-Gatters 13 aufgeschaltet.
Die Signaleingänge 4E des Steuergeräts 4 sind ebenfalls an einem ODER-Glied 17 zusammengefaßt, über dessen Ausgang bei vorliegender Alarmbedingung ein Zeitglied 18 (Zeitkonstante T₂ = z. B. 5 min) als Zeitschaltung für die optischen Alarmsignale angestoßen wird.
Der Ausgang des Zeitglieds 18 ist mit einem Eingang eines weiteren UND-Gatters 19 verbunden, dessen Ausgang wiederum unmittelbar an den Taktgeber 14 angeschlossen ist.
Der Ausgang des UND-Gatters 13 ist seinerseits an ein drittes Zeitglied 20 (Zeitkonstante T₃) angeschlossen, und dieses ist ausgangsseitig mit einem invertierenden Eingang des UND-Gatters 19 verbunden.
Spannungsversorgungen der Logikelemente sind der Vereinfachung halber nicht dargestellt.

Wird nun über einen oder mehrere der Eingänge 4E Alarm ausgelöst, so wird das Zeitglied 18 angestoßen. Dieses aktiviert über das UND-Gatter 19 den Taktgeber 14 und damit die Relais 10R und 10L. Während der vom Alarm-Taktgeber 14 gesteuerten Hellphasen der Lichtquellen wird der Ausgangspegel des ODER-Glieds 15 positiv und der nachgeschaltete Eingang des UND-Gatters 13 wegen der Invertierung negativ. Entsprechend sperrt dieses UND-Gatter 13. In den Dunkelphasen des Taktgebers 14 kann es hingegen durchschalten, vorausgesetzt, in diesem Zeitraum wird der Ausgangspegel des ODER-Gatters 12 positiv. Es versteht sich, daß der niedrige Dauerspannungspegel von dem hochohmigen Widerstand 5 her nicht zum Durchschalten des ggf. bei einem Schwellwert schaltenden ODER-Glieds 12 führt, sondern ausschließlich ein höherer Spannungspegel (z. B. Fahrtrichtungsanzeige "ein" am Schalter FBl).
In diesem Fall wird das Zeitglied 20 angestoßen und sein Ausgang positiv, so daß nunmehr das UND-Gatter 19 sperrt und die Aktivierung des Taktgebers 14 durch das Zeitglied 18 unterbrochen bzw. die Taktung der Lichtquellen 1 durch den eigenen Steuergerät-Taktgeber 14 jeweils für einen Ablauf der Zeitkonstanten T₃ unterdrückt wird. Die Zeitkonstante T₃ des Zeitglieds 20 ist deutlich kürzer als die des Zeitglieds 18 und beträgt z. B. eine Sekunde. Sie wird aber immer von neuem angestoßen, solange der Ausgang des ODER-Glieds 12 positive Impulse führt. Bleiben diese länger aus, so kann das UND-Gatter 19 nach dem Ablauf der Zeitkonstanten T₃ wieder durchschalten und damit die Ansteuerung der Lichtquellen 1 durch das EDW-Steuergerät 4 wieder ermöglichen.

Die in Figur 2 nur zur Funktionsverdeutlichung gezeigten Einzelkomponenten bilden in jedem Fall Bestandteile des Steuergeräts 4 und werden in der Regel selbstverständlich durch Hard- und Software des Mikroprozessors 9 integriert ausgeführt werden.

Dessen ungeachtet ist die gezeigte Überwachungsschaltung der Präsenz von Signalen eines Blinkgebers auf Anschlußleitungen nicht auf die Verwendung im Zusammenhang mit einem EDW-Steuergerät beschränkt.

## Patentansprüche

1. Schaltanordnung einer Einbruch-Diebstahl-Warnanlage (EDW) für ein Fahrzeug, mit der nach
- Scharfschalten zur Fahrzeugsicherung und
- Aktivieren der von einem Steuergerät beherrschten EDW durch Signalgeber (Alarmfall)
wenigstens optische Alarmsignale mittels am Fahrzeug vorgesehener, auch anderweitig einschaltbarer Lichtquellen nach außen in Zyklen intermittierend abstrahlbar sind und deren Steuergerät einen eigenen Taktgeber zum Takten besagter Lichtquellen im Alarmfall über Leitungen enthält,
**dadurch gekennzeichnet,**
daß das Steuergerät (4) ferner eine Schaltung (9; 12, 13, 15, 19, 20) zur Erfassung jedes fremdgespeisten, auf den Leitungen (2R, 2L) auftretenden elektrischen Signals aufweist und daß durch diese Schaltung (9; 12, 13, 15, 19, 20) bei erfaßtem Vorliegen eines fremdgespeisten Signals auf einer der Leitungen (2R und/oder 2L) die Taktung der Lichtquellen (1) durch den Taktgeber (14) jeweils für eine vorbestimmte darauffolgende Zeitspanne (T₃) unterdrückt wird.

2. Schaltanordnung nach Anspruch 1,
**dadurch gekennzeichnet,**
daß durch die Schaltung (9; 12, 13, 15, 19, 20) nur während der Dunkelphase jedes von dem Taktgeber (14) getakteten Zyklus auf den Leitungen (2R und/oder 2L) auftretende Signale erfaßt und zur Unterdrückung der Taktung der Lichtquellen (1) ausgewertet werden.

3. Schaltanordnung nach Anspruch 1 oder 2,
**dadurch gekennzeichnet,**
daß die Lichtquellen (1) Fahrtrichtungsanzeige-Blinklampen des Fahrzeugs sind.

4. Schaltanordnung nach Anspruch 3,
**dadurch gekennzeichnet,**
daß das Steuergerät (4) zwei separate Taktausgänge (4R, 4L) hat, die über die Leitungen (2R, 2L) jeweils mit den Fahrtrichtungsanzeige-Blinklampen einer Fahrzeugseite verbunden sind und daß das fremdgespeiste Signal durch Einschalten des Fahrtrichtungsanzeigebetriebs (FBl) auf einer der Leitungen (2R, 2L) erzeugbar ist.

5. Schaltanordnung nach Anspruch 3 oder 4,
**dadurch gekennzeichnet,**
daß wenigstens einer der zur Aktivierung der EDW vorgesehenen Signalgeber ein im Fahrbetrieb zwangsläufig immer wieder betätigter elektrischer Schalter ist, insbesondere ein Bremslichtschalter.

6. Schaltanordnung nach Anspruch 1 oder 4,
**dadurch gekennzeichnet,**
daß der Spannungspegel auf den Leitungen (2R, 2L) zur Erfassung fremdgespeister Signale an das Steuergerät (4) über weitere Leitungen (11R, 11L) rückgemeldet wird.

7. Schaltanordnung nach Anspruch 1 oder 3,
**dadurch gekennzeichnet,**
daß die den Lichtquellen (1) von dem in einen Mikroprozessor (9) des Steuergeräts (4) integrierten Taktgeber (14) vorgebbare Blinkfrequenz durch eine Kabelsatzcodierung von außen veränderlich einstellbar ist.

## Claims

1. Circuit arrangement of an anti-theft alarm for a vehicle, with which, after
- activation for the sake of protecting the vehicle and
- activation by signal generator (in the case of an alarm) of the anti-theft alarm controlled by a control unit,
at least optical alarm signals can be intermittently emitted to the outside in cycles by means of light sources which are provided on the vehicle and can also be switched on in other ways and whose control unit contains a separate clock generator for clocking said light sources in the case of an alarm via lines, characterised in that the control unit (4) also has a circuit (9; 12, 13, 15, 19, 20) for detecting each externally supplied electrical signal occurring on the lines (2R, 2L) and in that by this circuit (9; 12, 13, 15, 19, 20) the clocking of the light sources (1) is suppressed by the clock generator (14) in each case for a predetermined subsequent time period (T₃) when the presence of an externally supplied signal on one of the lines (2R and/or 2L) is detected.

2. Circuit arrangement according to Claim 1, characterised in that signals occurring on the lines (2R and/or 2L) only during the dark phase of each cycle clocked by the clock generator (14) are detected by the circuit (9; 12, 13, 15, 19, 20) and evaluated in order to suppress the clocking of the light sources (1).

3. Circuit arrangement according to Claim 1 or 2, characterised in that the light sources (1) are driving direction indicator lights of the vehicle.

4. Circuit arrangement according to Claim 3, characterised in that the control unit (4) has two separate clock outputs (4R, 4L) which are connected via the lines (2R, 2L) in each case to the driving direction indicator lights of one side of the vehicle and in that the externally supplied signal can be generated by switching on the driving direction indicator mode (FB1) on one of the lines (2R, 2L).

5. Circuit arrangement according to Claim 3 or 4, characterised in that at least one of the signal generators provided for activating the anti-theft alarm is an electrical switch, in particular a brake light switch, which can be repeatedly forcibly actuated during driving.

6. Circuit arrangement according to Claim 1 or 4, characterised in that the voltage level on the lines (2R, 2L) is fed back to the control unit (4) via further lines (11R, 11L) in order to detect externally supplied signals.

7. Circuit arrangement according to Claim 1 or 3, characterised in that the flashing frequency which can be prescribed for the light sources (1) by the clock generator (14) integrated into a microprocessor (9) of the control unit (4) can be variably set externally by means of a cable set encoding.

## Revendications

1. Circuit pour un système d'alarme anti-vol et anti-effraction (SVE) pour un véhicule, avec lequel,
- après mise en service d'un dispositif de sécurité du véhicule et
- activation du SVE contrôlé par un organe de commande au moyen d'un émetteur de signaux (cas d'alarme)
au moins des signaux optiques d'alarme peuvent être dégagés par cycles par intermittence vers l'extérieur au moyen de sources lumineuses prévues sur le véhicule, sources pouvant être également connectées d'une autre manière, et dont l'organe de commande comporte sa propre horloge pour synchroniser lesdites sources lumineuses en cas d'alerte, par l'intermédiaire de lignes, caractérisé en ce que
l'organe de commande (4) présente également un circuit (9 ; 12, 13, 15, 19, 20) pour détecter chaque signal électrique alimenté de l'extérieur apparaissant sur les lignes (2R, 2L) et en ce que ce circuit (9 ; 12, 13, 15, 19, 20) permet, en cas de présence détectée d'un signal alimenté de l'extérieur sur une des lignes (2R et/ou 2L) de supprimer la synchronisation des sources lumineuses (1) par l'horloge (14) chaque fois pour une durée suivante pré-déterminée (T₃).

2. Circuit suivant la revendication 1, caractérisé en ce que les signaux apparaissant sur les lignes (2R et/ou 2L) ne sont détectés par le circuit (9; 12, 13, 15, 19, 20) que pendant la phase d'obscurité de chaque cycle synchronisé par l'horloge (14), et qu'ils sont exploités pour supprimer la synchronisation des sources lumineuses (1).

3. Circuit suivant les revendications 1 ou 2, caractérisé en ce que les sources lumineuses (1) sont des feux clignotants indicateurs de la direction du véhicule.

4. Circuit suivant la revendication 3, caractérisé en ce que l'organe de commande (4) comporte deux sorties de synchronisation (4R, 4L) séparées qui sont connectées par l'intermédiaire des lignes (2R, 2L) respectivement aux feux clignotants indiquant la direction de véhicule d'un côté du véhicule, et que le signal alimenté de l'extérieur peut être obtenu par la mise en marche du fonctionnement d'indication de la direction du véhicule (FB1) sur une des lignes (2R, 2L).

5. Circuit suivant les revendications 3 ou 4, caractérisé en ce qu'au moins un des émetteurs de signaux prévus pour activer le SVE est un commutateur électrique actionné à répétition durant la conduite du véhicule, notamment un commutateur de feux stop.

6. Circuit suivant les revendications 1 ou 4, caractérisé en ce que le niveau de tension sur les lignes (2R, 2L) est retourné à l'organe de commande (4) par l'intermédiaire d'autres lignes (11R, 11L) pour détecter les signaux alimentés de l'extérieur.

7. Circuit suivant la revendication 1 ou 3, caractérisé en ce que la fréquence de clignotement définissable aux sources lumineuses (1) par l'horloge (14) intégrée dans un microprocesseur (9) de l'organe de commande (4) peut être réglée différemment de l'extérieur, par une codification en faisceaux de câbles.
